# EUROPÄISCHE PATENTSCHRIFT

(11) **EP 3 389 991 B1**
(45) Veröffentlichungstag und Bekanntmachung des Hinweises auf die Patenterteilung: **29.06.2022**
(21) Anmeldenummer: 16829233.2
(22) Anmeldetag: 19.12.2016
(51) Int. Cl.: F16L 55/165, B29C 63/34

(54) **SYSTEM ZUM AUSHÄRTEN EINES AUSKLEIDUNGSSCHLAUCHS**
SYSTEM FOR CURING A LINING TUBE
SYSTÈME PERMETTANT DE FAIRE DURCIR UN TUYAU DE REVÊTEMENT

(30) Priorität: 18.12.2015 DE 102015122313
(43) Veröffentlichungstag der Anmeldung: 24.10.2018
(73) Patentinhaber: RelineEurope AG, 76865 Rohrbach (DE)
(72) Erfinder: WIND, Herbert, 76857 Albersweiler (DE); NOLL, Christian, 67117 Limburgerhof (DE); REICHEL, Stefan, 67098 Bad Dürkheim (DE)
(74) Vertreter: Dr. Langfinger & Partner
(86) Internationale Anmeldenummer: PCT/DE2016/100602
(87) Internationale Veröffentlichungsnummer: WO 2017/101916

(56) Entgegenhaltungen:
- EP-A1- 1 959 183
- EP-A1- 1 959 183
- EP-B1- 2 037 246
- DE-A1- 19 817 413
- DE-A1-102010 011 610

## Beschreibung

Die vorliegende Erfindung betrifft ein Verfahren zum Aushärten eines Auskleidungsschlauchs.

Verfahren zur Sanierung von Leitungssystemen, in denen zum Beispiel flüssige oder gasförmige Medien transportiert werden, sind im Stand der Technik bekannt und vielfach beschrieben.

Beispielsweise sind Verfahren bekannt, bei denen die einen Defekt oder eine Beschädigung aufweisenden Abschnitte des Leitungssystems durch neue Abschnitte ersetzt werden. Dies ist jedoch aufwendig und auch nicht immer möglich.

Des weiteren sind Verfahren im Stand der Technik bekannt, bei denen zur Sanierung von Leitungssystemen, z.B. von Kanälen und ähnlichen Rohrsystemen, eine flexibler, mit einer mit härtbaren Harz getränkte aushärtbare Lage, die als Auskleidungsschlauch, auch als Liner bezeichnet, dient, in das Leitungssystem eingeführt wird. Nach dem Einführen wird der Auskleidungsschlauch aufgeweitet, so dass er sich eng an die Innenwand des Leitungssystems anschmiegt. Anschließend wird das Harz ausgehärtet.

Die Herstellung eines derartigen Auskleidungsschlauches ist beispielsweise in der WO 95/04646 beschrieben. Ein solcher Auskleidungsschlauch weist üblicherweise eine lichtundurchlässige äußere Schutzfolie, eine mindestens für bestimmte Wellenlängenbereiche elektromagnetischer Strahlung durchlässige Innenfolie sowie eine mit einem Harz getränkte aushärtbare Lage auf, die zwischen der Innenfolie und der Außenfolie angeordnet ist.

Der Aussenfolienschlauch soll verhindern, dass das zur Imprägnierung verwendete Harz aus der aushärtbaren Lage austritt und in die Umwelt gelangt. Dies setzt eine gute Dichtigkeit und Anbindung des äußeren Folienschlauchs an die harzgetränkte aushärtbare Lage voraus.

Aus der WO 00/73692 A1 ist ein Auskleidungsschlauch bekannt umfassend einen Innenfolienschlauch, ein mit einem Harz getränktes Faserband als aushärtbare Lage und einen Außenschlauch, der an seiner Innenseite mit einem Faservlies kaschiert ist.

Oftmals wird das harzgestränkte Faserband auf den Innenschlauch eines Auskleidungsschlauchs zu dessen Herstellung schraubenförmig und überlappend aufgewickelt. Der Außenschlauch wird anschließend ebenfalls schraubenförmig und überlappend um das harzgetränkte Faserband gewickelt. Als härtbare Harze werden im Stand der Technik ungesättigte Polyesterharze, Vinylesterharze oder Epoxydharzeverwendet, die beispielsweise in Styrol und/oder einem Acrylester gelöst sein können. Diese ungesättigten Polyester- oder Vinylester können thermisch (üblicherweise durch Peroxidkatalysatoren) oder mittels Strahlung, z.B. durch UV-Licht mit Photoinitiatoren, wie beispielsweise in der EP-A 23623 beschrieben, ausgehärtet werden. Auch so genannte Kombinationshärtungen mit einem für die thermische Härtung verwendeten Peroxidinitiator in Kombination mit Photoinitiatoren sind möglich und haben sich insbesondere bei großen Wandstärken der Auskleidungsschläuche als vorteilhaft erwiesen. Ein Verfahren für eine derartige sogenannte Kombinationshärtung ist beispielsweise in der EP-A 1262708 beschrieben. Ungesättigte Polyesteroder, Vinylesterharze unterliegen bei der Härtung einem Schwund, was die Stabilität des sanierten Leitungssystems im späteren Betrieb beeinträchtigen kann. Epoxydestherharze weisen hingegen eine bessere Dimensionsstabilität bei der Aushärtung nach Einbringung auf.

Der Innenschlauch selber wird dabei zur vereinfachten Herstellung auch um einen Wickeldorn gewickelt. Alternativ offenbart beispielsweise WO 95/04646 das ein vorgefertigter Innenfolienschlauch aufgeblasen werden und selbst als Wickeldorn dienen kann. Ein solcher vorgefertigter Innenfolienschlauch wird dabei aus einem Folienband hergestellt, dessen Folienränder miteinander durch Schweißen oder Kleben miteinander verbunden werden, um den Innenfolienschlauch zu bilden.

Die Auskleidungsschläuche werden vor dem Aushärten in die zu sanierenden Leitungssystem eingeführt und mittels eines Fluids, i.d.R. Druckluft, aufgeblasen. Für ein Aufblasen des Auskleidungsschlauchs wird ein Öffnungsende des Auskleidungsschlauchs gemäß dem Stand der Technik mit Druckluft beaufschlagt und das gegenüberliegende Öffnungsende des Auskleidungsschlauchs mit einer Verschlussvorrichtung, einem sogenannten Packer, verschlossen. Diese Verschlussvorrichtung umfasst dabei einen Hohlzylinder und ein Abdeckelement, mit welchem der Hohlzylinder verschlossen werden kann.

In den Auskleidungsschlauch wird zum Aushärten desselben eine Aushärtevorrichtung eingeführt, die eine Strahlungsquelle aufweist, und die durch den Auskleidungsschlauch geführt wird, um mit der Strahlungsenergie die Aushärtung der aushärtbaren Lagen des Auskleidungsschlauchs zu aktivieren bzw. vorzunehmen. Dabei ist eine vollständige Aushärtung der Auskleidungsschläuche von großer Bedeutung, d.h. es muss eine bestimmte Menge Strahlungsenergie an jeden Punkt des Auskleidungsschlauchs in diesen eingebracht werden. Die Menge an Strahlungsenergie hängt dabei von der Leistungsabgabe der Strahlungsquellen sowie der Geschwindigkeit ab, mit der diese durch den Auskleidungsschlauch durchgeführt werden.

DE19817413 A1 offenbart ein Verfahren zur Regelung der Geschwindigkeit einer Aushärtung eines Auskleidungsschlauchs. Dabei werden eine oder mehrerer UV- Lichtquellen mittels eines zentral geführten Zugkabels durch das Rohr geführt, wodurch das Harz der aushärtbaren Lage des Auskleidungsschlauchs gehärtet wird. Die Steuerung der Geschwindigkeit, mit der die Lichtquellen gezogen werden, erfolgt dabei in Abhängigkeit von der durch die exotherme Härtungsreaktion erzeugten Temperatur an der inneren Oberfläche des Schlauchs. Im Bereich der Lichtquellen werden eine Reihe IR-Sensoren mitgeführt, die im selben Winkel auf eine - parallel zum Zugkabel verlaufende - fiktive Linie an der inneren Oberfläche des Schlauchs ausgerichtet sind. Auf dieser Linie sind bestimmte Messpunkte definiert, wobei während des Vorbeiziehens der Sensoren an den Messpunkten die Temperatur an jedem Messpunkt durch die Sensoren gemessen wird.

Grundsätzlich ist es gemäß dem Stand der Technik somit bekannt, anhand von diskontinuierlichen Messpunkten an der Innenseite des Auskleidungsschlauchs die Temperatur zu bestimmen, um die Geschwindigkeit des Vortriebs einer Aushärtevorrichtung zu regeln.

Aus EP 1 959 183 B1 ist eine Vorrichtung bekannt, die mittels gekühlter LEDs die Strahlungsenergie für die Aushärtung eines Auskleidungsschlauchs bereitstellt. Dabei erfolgt die Regelung der Aushärtung bzw. das Bewegen der Vorrichtung zum Aushärten durch den Auskleidungschlauchs mittels gemessener Temperaturwerte in dem Auskleidungsschlauch.

EP 2037246 A1 beschreibt Verfahren zur Überwachung des Zustandes einer Auskleidung in einem Rohr- oder Kanalsystem angegeben werden, welches über einen langen Zeitraum vornehmbar ist, wobei zeitlich einmalige oder zeitlich beliebig wiederholbare Messungen möglich sind. Dabei wird nicht offenbart, dass für lichthärtende Auskleidungsschläuche zwischen einer Außenfolie und einer aushärtbaren Lage angeordnet ist.

Nachteilig an den bekannten Lösungen ist jedoch, dass zum einen keine Regelung der Geschwindigkeit des Vortriebs basierend auf exakten Temperaturmessdaten erfolgt, sondern Messungen nur an bestimmten Messpunkten stattfinden, sowie dass auf der Innenseite des Auskleidungsschlauchs gemessen wird. Gerade bei Auskleidungsschläuchen mit aushärtbaren Lagen mit größerem Durchmesser oder mit einer hohen Wandstärke ist es entscheidend, dass diese vollständig durchhärten. Basierend auf einer Temperaturmessung auf der Innenseite eines Auskleidungsschlauchs kann somit ausschließlich indirekt auf die Durchhärtung desselben geschlossen werden.

Des weiteren ist es nachteilig, dass die Leistungsabgabe der Strahlungsquelle innerhalb des Leitungssystems nicht zwingend gleichmäßig erfolgt und somit eine Temperaturmessung an der Innenseite der Leitungen keine sichere Aussage über die Aushärtung der Auskleidungsschläuche ermöglicht. Bei Leitungen mit einem kreisrunden Querschnitt ist eine gleichmäßige Leistungsabgabe der Strahlungsquellen zwar in der Regel realisierbar, bei beispielsweise ovalen bzw. eiförmigen Querschnitten der Leitungen jedoch nicht, da der Abstand der Strahlungsquellen auf der Aushärtevorrichtung zu der Innenwand entlang des Querschnitts unterschiedlich ist.

Zudem können Wasserablagerungen im unteren Bereich der Leitungen die Aushärtung negativ beeinflussen, da aufgrund der Wasserablagerungen auch bei gleichmäßiger Leistungsabgabe der Strahlungsquellen eine ungleichmäßige Aushärtung vorliegt.

Demzufolge lag der vorliegenden Erfindung die Aufgabe zugrunde, die Nachteile des Stands der Technik zu überwinden, und insbesondere ein System und ein Verfahren zu liefern, welches eine Aushärtung eines Auskleidungsschlauchs mit hoher Präzision sicherstellt, in dem die abgegebene Strahlungsenergie basierend auf Temperaturmesswerten optimal geregelt wird.

Diese Aufgabe wird insbesondere gelöst durch ein System nach Anspruch 1.

Nachteile des Stands der Technik zu überwinden, und insbesondere ein System und ein Verfahren zu liefern, welches eine Aushärtung eines Auskleidungsschlauchs mit hoher Präzision sicherstellt, in dem die abgegebene Strahlungsenergie basierend auf Temperaturmesswerten optimal geregelt wird.

Diese Aufgabe wird insbesondere gelöst durch ein System zum Aushärten eines Auskleidungsschlauchs umfassend eine Aushärtungsvorrichtung mit einer Strahlungsquelle, einen Auskleidungsschlauch mit einer aushärtbaren Lage und eine um die aushärtbare Lage angeordnete Außenfolie, eine Messeinrichtung, die zwischen der aushärtbaren Lage und der Außenfolie angeordnet ist, wobei die Messeinrichtung ausgelegt und eingerichtet ist, um einen Messwert repräsentativ für die Aushärtung der aushärtbaren Lage zu erfassen sowie eine Steuerungs- oder Regelungseinrichtung, die ausgelegt und eingerichtet ist, um die Fortbewegung der Aushärtevorrichtung in dem Auskleidungsschlauch und/oder die Leistungsabgabe der Strahlungsquelle der Aushärtevorrichtung in Abhängigkeit der durch die Messeinrichtung erfassten Messwerte an der Außenseite der aushärtbaren Lage zu steuern oder zu regeln.

Erfindungsgemäß hat es sich als vorteilhaft erweisen, die Erfassung von Messwerten repräsentativ für den Zustand der Aushärtung der aushärtbaren Lage von der Innenseite an die Außenseite der aushärtbaren Lage des Auskleidungsschlauchs zu verlagern.

Durch ein Erfassen der Messwerte an der Außenseite des Auskleidungsschlauchs kann sichergestellt werden, dass eine ausreichende Aktivierung der aushärtbaren Lage stattgefunden hat, um diese vollständig durchzuhärten.

Dabei ist es nicht mehr von Relevanz, dass durch unterschiedliche Abstände der Strahlungsquellen je nach Querschnitt der Leitungen oder Wasserablagerungen im unteren Bereich der Leitung die Messung des Aushärtevorgangs verfälschen werden kann, wie bei einer Messung der Temperatur an der Innenseite des Auskleidungsschlauchs, sondern vielmehr wird darauf abgestellt, dass der Auskleidungsschlauch bis zu seiner Außenseite durchgehärtet ist. Die Zuverlässigkeit des Aushärteverfahrens wird somit durch das erfindungsgemäße Verfahren optimiert.

Des weiteren hat es sich gezeigt, dass eine wesentlich verbesserte Regelung der Aushärtung erfolgen kann, wenn diese auf einer Vielzahl von Messpunkten oder einer kontinuierlichen Temperaturmessung durchgeführt wird.

Im Stand der Technik ist die Messung der Temperatur an der Außenseite von Auskleidungsschläuchen prinzipiell beschrieben. Diese Messungen erfolgen aber nicht bei der Aushärtung von Auskleidungsschläuchen mittels Strahlungsquellen, sondern bei der sogenannten Warmwasseraushärtung. Bei der Warmwasseraushärtung härtet der Auskleidungsschlauch durch eine Zugabe von Energie in Form von Wasserdampf oder heißen Warmwasser aus. Die thermische Aushärtung des Auskleidungsschlauchs und der dabei entstehende Temperaturanstieg wird in der Regel dabei gemessen und für die Überwachung des Aushärtungsvorgangs des Auskleidungsschlauchs herangezogen.

Der wesentliche Unterschied zwischen dem vorliegenden erfindungsgemäßen Verfahren, dass eine Aushärtung der Auskleidungsschläuche mittels Strahlungsquellen vorsieht, und der Warmwasseraushärtung liegt nunmehr darin, dass bei der Warmwasserhärtung wenige stichprobenhafte Messungen ausreichen, um die Temperatur des Wasserdampfs oder des Warmwassers nachzuregeln, da diese sich nur graduell über die Länge des Auskleidungsschlauchs ändert.

Das Durchfahren eines Auskleidungsschlauches mittels einer Strahlungsquelle setzt dabei für eine zuverlässige Aushärtung wesentliche exaktere Messwerte entlang desselben voraus, da die jeweils notwendige Strahlungsenergie an jedem Punkt des Auskleidungsschlauchs ausreichend sein muss, um diesen durchzuhärten.

Dies wird erfindungsgemäß dadurch erreicht, dass die Steuerung oder Regelung der abgegebenen Strahlungsenergie anhand einer Vielzahl von Messpunkten oder kontinuierlich erfolgt.

Es kann gemäß einer Ausführungsform der vorliegenden Erfindung vorteilhaft sein, dass die Messeinrichtung ausgelegt und eingerichtet ist, um eine Temperatur, eine Dielektrizitätskostante, eine Farbe und/oder einen Zustand mittels Ultraschall der Aushärtung der aushärtbaren Lage zu messen.

Üblicherweise erfolgt eine Erfassung des Zustands der Aushärtung eines Auskleidungsschlauchs über eine Messung der Temperatur derselben beim Aushärten. Jedoch ist nicht nur die Temperatur ein geeigneter Indikator für die Aushärtung, sondern diese lässt sich anhand andere Parameter ebenso bestimmten.

Es hat sich gezeigt, dass sich ein durchgehärteter und ein nicht ausgehärteter Auskleidungsschlauch in ihrer Dielektrizitätskostante sowie ihrer Farbe unterscheiden. Auch hat sich gezeigt, dass sich die Struktur eines ausgehärteten Auskleidungsschlauchs deutlich von einem nicht ausgehärteten unterscheidet und diese strukturelle Änderung mittels Ultraschallmessungen erfassbar ist. Es sind somit auch optische Messvorrichtungen, Ultraschallmessgeräte, elektrische Messvorrichtungen zur Messung der Kapazität und Temperaturmessvorrichtungen als Messeinrichtung oder Bestandteil der Messeinrichtungen denkbar.

Des weiteren kann es vorteilhaft sein, dass die Messeinrichtung eine Vielzahl von Messwerten anhand von Messpunkten entlang der Längsrichtung des Auskleidungsschlauchs erfasst, wobei der Abstand der Messpunkte insbesondere durch den Wirkbereich der Strahlungsquelle bestimmt ist, wobei vorzugsweise immer mindestens N Messpunkte, mit N = 1, 2, 3, 4, 5, 6, 7, 8 oder 9, im Wirkbereich der Strahlungsquelle angeordnet sind.

Der Wirkbereich einer Strahlungsquelle ist aufgrund der oftmals verwendeten UV-Strahlung begrenzt. Diese wird daher, wie ausgeführt, zum Aushärten durch den Auskleidungsschlauch bewegt. Es hat sich dabei als vorteilhaft erwiesen, dass die Messpunkte der Messeinrichtung entlang der Längsachse des Auskleidungsschlauchs derart angeordnet werden, dass die Aushärtung des Auskleidungsschlauchs kontinuierlich überwacht werden kann. Daher sollte bevorzugt immer ein Messpunkt im jeweiligen Wirkbereich der Strahlungsquelle angeordnet sein.

Es kann dabei besonders vorteilhaft sein, dass eine ausschließlich diskrete Erfassung von Messwerten anhand von voneinander beabstandet angeordneten Messpunkten erfolgt.

Alternativ kann vorgesehen sein, dass die Messeinrichtung Messwerte kontinuierlich über die gesamte Länge des Auskleidungsschlauchs entlang dessen Längsrichtung erfasst.

Es kann gemäß einer Ausführungsform auch vorgesehen sein, dass ein Messen der Temperatur mittels der Messeinrichuntung in Form einer Temperaturmesseinrichtung mittels mindestens eines Temperaturmesselements erfolgt, welches sich entlang der Längsrichtung des Auskleidungsschlauchs erstreckt, insbesondere von einem öffnungsseitigen Ende des Auskleidungsschlauchs zu einem gegenüberliegenden öffnungsseitigen Ende des Auskleidungsschlauchs, so dass eine Temperatur an der Außenseite der aushärtbaren Lage, zumindest bereichsweise, entlang der gesamten Länge des Auskleidungsschlauchs erfasst wird und/oder die Temperaturmessvorrichtung mindestens zwei, insbesondere n, mit n = 1, 2, 3, 4, 5, 6, 7, 8, 9, 10 oder mehr, Temperaturmesselemente umfasst, welches entlang der Längsrichtung des Auskleidungsschlauchs beabstandet zueinander angeordnet sind, insbesondere in einem regelmäßigen Abstand, wobei jedes der mindestens zwei Temperaturmesselemente die Temperatur an der Außenseite der aushärtbaren Lage entlang eines Längsabschnitts des Auskleidungsschlauchs erfasst oder erfassen kann, und wobei die Temperaturmessvorrichtung insbesondere in den Auskleidungsschlauch integriert ist, vorzugsweise zwischen der Außenseite der aushärtbaren Lage und einer äußeren Schutzfolie.

Durch ein erfindungsgemäßes Temperaturmesselement, welches sich entlang der gesamten Länge des Auskleidungsschlauchs erstreckt, kann eine präzise Regelung der Leistungsabgabe und/oder der Vortriebsgeschwindigkeit der Aushärtevorrichtung entlang des vollständigen Auskleidungsschlauchs erfolgen. Alternativ kann auch vorgesehen sein, dass eine Erfassung der Temperatur an bestimmten Messpunkten oder Messbereichen erfolgt, welche beabstandet zueinander in Längsrichtung entlang des Auskleidungsschlauchs angeordnet sind. Dabei kann erfindungsgemäß sowohl vorgesehen sein, dass die Temperaturmesseinrichtung bzw. mindestens eines der Temperaturmesselemente in den Auskleidungsschlauch integriert ist, vorzugsweise zwischen der aushärtbaren Lage und einer äußeren Schutzfolie. Alternativ oder zusätzlich kann auch vorgesehen sein, dass die Temperaturmesseinrichtung vor Einziehen des Auskleidungsschlauchs in die zu sanierende Leitung in diese eingebracht wird, beispielsweise indem Temperaturmesselemente mittels Kleben, Schrauben, Tackern, und dergleichen, an der Innenseite der zu sanierenden Leitung angebracht werden.

Dabei kann bevorzugt sein, dass das Temperaturmesselement in Form eines Kabels, insbesondere in Form eines Flachbandkabels, vorzugsweise umfassend einen faseroptischen Sensor, ausgebildet ist.

Ein Flachbandkabel hat insbesondere den Vorteil, dass diese einfach auf die aushärtbare Lage des Auskleidungsschlauchs auflegbar ist. Dies kann mit einfachen Mitteln während der Herstellung des Auskleidungsschlauchs erfolgen. Ein Flachbandkabel weist dabei den Vorteil auf, dass dieses an einem Stück mit eingebracht werden kann und keinen großen Höhenunterschied zu dem umliegenden Auskleidungsschlauch verursacht. Ein solcher geringer Höhenunterschied hat insbesondere den Vorteil, dass das Kabel ein Einziehen des Auskleidungsschlauchs in eine Leitung nicht negativ beeinträchtig, in dem sich die Sensorik in Unebenheiten der Leitung verhakt. Zudem sinkt das Risiko von Beschädigungen.

Des weiteren weist ein Flachbandkabel den Vorteil auf, dass dieses, sofern die eigentliche Sensorik in der neutralen Phase des Flachbandkabels angeordnet ist, die Sensorik vor Beschädigungen beim Falten des Auskleidungsschlauchs schützt. Dieser wird für den Transport meanderförmig in Kisten gelegt, wobei jeweils 180° Biegungen des Schlauches notwendig werden. Eine in der neutralen Phase eines Flachbandkabels angeordnete Sensorik wird dabei ausschließlich geringen Biegebelastungen ausgesetzt und nicht beschädigt. Auch ist vorteilhaft, dass im Gegensatz zu einem runden Kabel die Gefahr einer Torsion in Längsrichtung reduziert wird und die Lage der Messsensorik in dem Flachbandkabel fixiert werden kann.

Erfindungsgemäß kann es dabei ebenfalls bevorzugt sein, dass das Flachbandkabel ein optisches Sensorkabel ausbildet, welches eine Kabelseele und einen Kabelmantel umfasst, wobei die Kabelseele einen Licht mit einer Wellenlänge in einem Bereich von 200 bis 480nm leitenden Lichtwellenleiter umfasst, der ein Coating aufweist, welches für Licht mit einer Wellenlänge in einem Bereich von 200 bis 480nm transparent ist und mantelseitig eingestrahltes Licht einkoppelt und in Längsrichtung weiterleitet, und wobei der Kabelmantel einen im Querschnitt flachen Profilkörper ausbildet, in den der Lichtwellenleiter in der neutralen Phase des Kabelmantel eingebracht ist, und wobei der Kabelmantel einen transparenten Bereich aufweist, der lichtdurchlässig ist, ausgelegt und eingerichtet, um Licht von der Außenseite des Kabelmantel zum Lichtwellenleiter weiterzuleiten.

Dabei kann vorgesehen sein, dass der Lichtwellenleiter einen Kern aus Quarz, ein Cladding aus Fluor-dotiertem Quarz und ein Coating aus einem Kunststoff umfasst.

Des Weiteren kann vorgesehen sein, dass die Kabelseele einen zweiten Lichtwellenleiter umfasst, insbesondere beabstandet von dem ersten Lichtwellenleiter, der ausgelegt und eingerichtet zur Erfassung der Raman-Streuung bei einem faseroptischen Messverfahren ist, insbesondere umfassend einen Germanium-dotierten Faserkern.

Alternativ kann vorgesehen sein, dass die Temperaturmessvorrichtung einen Lichtwellenleiter umfasst, der ausgelegt und eingerichtet zur Erfassung der Raman-Streuung bei einem faseroptischen Messverfahren ist, insbesondere umfassend einen Germanium-dotierten Faserkern.

Sowohl der erste als auch der zweite Lichtwellenleiter können lose, als Hohlader-Aufbau, oder mit einer transparenten Umhüllen eingebracht werden. Als vorteilhaft haben sich Lichtwellenleiter mit einem Kerndurchmesser in einem Bereich von 50µm bis 200µm, insbesondere von 110µm erwiesen. Dabei weisen die Lichtwellenleiter einen Kren aus Reinstquarz, ein Cladding aus Fluor-dotiertem Quarz und ein Coating aus einem transparenten Kunststoff auf. Die Brechzahl eines solchen Lichtwellenleiter ist üblicherweise N = 1,46 für den Kern und eine geringere Brechzahl als 1,46 für das Cladding. Der Profilkörper ist dabei derart ausgelegt und eingerichtet, dass er bei einer Biegung von 180°-Umlenkung bruchfest ist.

Der erste Lichtwellenleiter liegt dabei im transparenten Bereich während der zweite Lichtwellenleiter außerhalb des transparenten Bereichs angeordnet ist. Vorzugsweise ist dieser zweite Bereich eingefärbt, also nicht transparent. Dabei ist der zweite Lichtwellenleiter ein zur Temperaturmessung geeigneter faseroptischer, ortsaufgelöster zur Temperaturmessung geeigneter Lichtwellenleiter.

Alternativ kann es vorteilhaft sein, dass ein Messen der Temperatur mitttels der Temperaturmesseinrichtung mittels eines Temperaturmesselements erfolgt, welches piezoelektrische Kristalle aus Quarz und/oder Lithiumniobat mit lithographisch aufgebrachten Elektrodenstrukuren umfasst, die ein ankommendes Funksignal in eine Oberflächenwelle, die sich über den Kristall ausbreitet, umwandelt, und wobei die reflektierten Oberflächenwellen in ein elektrisches Signal zurückrückwandelbar sind oder zurückgewandelt werden, wobei eine Temperaturänderung zu einer definierten detektierbaren Änderung des reflektierten Signals führt, so dass in Reaktion auf einen Anfrageimpuls und der Impulsantwort eine Temperaturmessung erfolgen kann bzw. erfolgt.

Diese Ausgestaltung weist insbesondere den Vorteil auf, dass ein rein passives Bauelement vorliegt, welches durch den Anfrageimpuls und der Auswertung der Impulsantwort ausgelesen werden kann, ohne das eine eigene, in das Temperatusmesselement integrierte, oder eine externe, Energieversorgung vorliegen muss. Die erfindungsgemäßen Temperaturmesselemente, die auch unter der Bezeichnung "surface acoustic wave" (SAW-) Transponder bekannt sind, können dabei unter hohen Temperaturen (400 °C) arbeiten und weisen sehr schnelle Reaktionszeiten im Mikrosekundenbereich auf. Somit können die erfindungsgemäßen Temperaturmesselementen an den gewünschten Stellen eines Auskleidungsschlauchs positioniert werden, ohne dass eine Verkabelung derselben erfolgt, wobei diese eine schnelle Reaktionsgeschwindigkeit bei einer hohen Temperaturbeständigkeit aufweisen.

Auch kann vorgesehen sein, dass die Messeinrichtung angeordnet ist, um Messwerte im unteren Drittel, insbesondere direkt am Boden und/oder am Bodenbereich des Auskleidungsschlauchs zu umfassen.

Somit wird verhindert, dass der negative Einfluss von Wasserablagerungen im Bodenbereich des Auskleidungsschlauchs zu einer unzureichenden Aushärtung führen kann.

Auch kann vorgesehen sein, dass die Aushärtevorrichtung als Strahlungsquelle eine Gasentladungslampe, eine Kurzbogenlampe, eine Stroboskoplampe, eine Blitzlampe, Licht emittierende Dioden (LEDs), eine Bogenlampe, insbesondere eine Xenon-Lampe, und/oder einer Quecksilber-Xenon-Lampe umfasst, wobei insbesondere das Leuchtmittel mindestens zehn Prozent (10%), insbesondere mindestens fünfzig Prozent (50%), der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt oder bereitstellen kann.

Die Auskleidungsschläuche weisen in der Regel als aushärtbare und/oder aushärtende Lage ein oder mehrere Faserbänder auf, die mit einem härtbaren Harz getränkt sind. Als Faserbänder eignen sich dabei grundsätzlich alle dem Fachmann bekannten Produkte in Form von Geweben, Gewirken, Gelegen, Matten oder Vliesen, die Fasern in Form von langen Endlosfasern oder kurzen Fasern enthalten können. Entsprechende Produkte sind dem Fachmann an sich bekannt und in großer Vielfalt von verschiedenen Herstellern kommerziell erhältlich. Solche Auskleidungsschläuche lassen sich mit erfindungsgemäßen Strahlungsquellen optimal aushärten.

Im Rahmen der vorliegenden Erfindung sollen als Faserbänder im Sinne der Erfindung auch Filze verstanden werden. Ein Filz ist ein Flächengebilde aus einem ungeordneten, nur schwer zu trennendem Fasergut. Prinzipiell sind Filze damit nicht gewebte Textilien. Aus Chemiefasern und Pflanzenfasern werden Filze in der Regel durch trockene Vernadelung (sog. Nadelfilze) oder durch Verfestigung mit unter hohem Druck aus einem Düsenbalken austretenden Wasserstrahlen hergestellt. Die einzelnen Fasern im Filz sind ungeordnet miteinander verschlungen. Filze weisen eine gute Temperaturbeständigkeit auf und sind in der Regel feuchtigkeitsabweisend, was bei der Anwendung in flüssigkeitsführenden Systemen von Vorteil sein kann.

Die Länge der verwendeten Fasern unterliegt keiner besonderen Beschränkung, d.h. es können sowohl so genannte Langfasern als auch Kurzfasern oder Faserbruchstücke verwendet werden. Über die Länge der verwendeten Fasern lassen sich die Eigenschaften der entsprechenden Faserbänder auch über weite Bereiche einstellen und steuern.

Auch die Art der verwendeten Fasern unterliegt keiner Beschränkung. Nur beispielhaft seien hier Glasfasern, Carbonfasern oder Kunststofffasern wie Aramidfasern oder Fasern aus thermoplastischen Kunststoffen wie Polyestern oder Polyamiden oder Polyolefinen (z.B. Polypropylen) genannt, die dem Fachmann mit ihren Eigenschaften bekannt und in großer Vielzahl kommerziell erhältlich sind. Aus wirtschaftlichen Gründen werden in der Regel Glasfasern bevorzugt; ist jedoch beispielsweise eine besondere Hitzebeständigkeit von Bedeutung, können beispielsweise Aramidfasern oder Carbonfasern eingesetzt werden, die hinsichtlich der Festigkeit bei höheren Temperaturen Vorteile gegenüber Glasfasern bieten können.

Die Auskleidungsschläuche können ein oder mehrere Faserbänder enthalten, die zudem gleich oder unterschiedlich sein können. Weitere geeignete Kombinationen mehrerer Faserbänder sind in der WO 201 1/006618 beschrieben, auf die an dieser Stelle vollinhaltlich Bezug genommen wird. Auch die WO 2003/038331 beschreibt Faserbänder bzw. Endlosstoffe mit geeignetem Aufbau.

Gemäß einer Ausführungsform der vorliegenden Erfindung kann vorgesehen sein, dass die Messeinrichtung einen RFID-Transponder umfasst, um die Messwerte drahtlos an die Steuerungs- oder Regelungseinrichtung zu übertragen.

Dies hat sich insbesondere als vorteilhaft erwiesen, um Temperaturmesselemente als passive Elemente in einen Auskleidungsschlauch integrieren zu können, wobei auf durch den Auskleidungsschlauch durchgeführte elektrische Anschlussleitungen verzichtet werden kann

Des weiteren kann es vorgesehen sein, dass die Aushärtevorrichtung mittels eines Kabels, insbesondere eines Kabels umfassen Kevlarfasern und/oder mindestens ein Zugseil, und/oder Zugseils, in Wirkverbindung steht, um die Aushärtevorrichtung durch den Auskleidungsschlauch zu bewegen.

Auch kann es bevorzugt sein, dass die Regelungseinrichtung ausgelegt und eingerichtet ist, um die Fortbewegung der Aushärtevorrichtung in dem Auskleidungsschlauch und/oder die Leistungsabgabe der Strahlungsquelle der Aushärtevorrichtung in Abhängigkeit der durch die Messeinrichtung erfassten Messwerte automatisch zu regeln.

Dabei kann vorgesehen sein, dass ein Definieren mindestens eines ersten Schwellwerts für einen Messwert repräsentativ für einen nicht ausgehärteten Auskleidungsschlauch und mindestens eines zweiten Schwellwerts, unterschiedlich von dem ersten Schwellwert, repräsentativ für einen ausgehärteten Auskleidungsschlauch, erfolgt, wobei eine Geschwindigkeit der Fortbewegung der Aushärtevorrichtung durch den Auskleidungsschlauch bei einem Unterschreiten des ersten Schwellwerts verringert wird und bei einem Überschreiten des zweiten Grenzwerts erhöht wird und/oder die Leistungsabgabe der Aushärtevorrichtung bei einem Unterschreiten des ersten Grenzwerts erhöht und bei einem Überschreiten des zweiten Grenzwerts verringert wird.

Hierbei kann es vorteilhaft sein, dass die Schwellwerte in Abhängigkeit des auszuhärtenden Auskleidungsschlauchs, insbesondere in Abhängigkeit des Durchmessers der auszuhärtenden Lage des Auskleidungsschlauchs, festlegbar oder festgelegt sind.

Ein automatisches Fortbewegen der aktivierten Aushärtevorrichtung, wobei die Fortbewegung der Aushärtevorrichtung in dem Auskleidungsschlauch und/oder die Leistungsabgabe der Aushärtevorrichtung in Abhängigkeit der durch die Messeinrichtung erfassten Messwerte an der Außenseite der aushärtbaren Lage gesteuert oder geregelt wird, ist vorteilhaft gegenüber den aus dem Stand der Technik bekannten Lösungen.

Ein solches automatisches Fortbewegen kann dabei durch die im Allgemeinen verwendeten Kabel, insbesondere umfassend Kevlarfasern und/oder mindestens eine Zugseil, und/oder Zugseile erfolgen, wobei in diesem Fall die Zuggeschwindigkeit basierend auf den erfassten Temperaturmesswerten geregelt wird, es können aber auch alternativ oder zusätzlich Aushärtevorrichtungen zum Einsatz kommen, die eine eigene Antriebseinrichtung umfassen, deren Vortrieb durch die erfassten Temperaturmesswerte eingeregelt wird.

Dabei ist insbesondere vorgesehen, dass obere und untere Schwellwerte definiert oder definierbar sind, wobei bei einem Erreichen oder Überschreiten eines oberen Schwellwerts der Messwerte die Fortbewegung der Aushärtevorrichtung beschleunigt wird und/oder die Leistungsabgabe der der Aushärtevorrichtung verringert wird und bei einem Erreichen oder Unterschreiten eines unteren Schwellwerts der Vortrieb der Aushärtevorrichtung reduziert wird und/oder die Leistungsabgabe der Aushärtevorrichtung erhöht wird.

Auch kann vorgesehen sein, dass eine Anzeigeeinrichtung umfasst ist, die mit der Steuerungs- oder Regelungseinrichtung in Wirkverbindung steht, und wobei die Anzeigeeinrichtung ausgelegt und eingerichtet ist, um eine grafische Repräsentation der von der Messeinrichtung erfassten Messwerte anzuzeigen, wobei insbesondere eine erste grafische Repräsentation für einen erste Messwert angezeigt wird, bei der der Auskleidungsschlauch noch nicht ausgehärtet ist und eine zweite grafische Repräsentation angezeigt wird, wenn Auskleidungsschlauch ausgehärtet ist.

Dabei kann vorgesehen sein, dass eine Eingabeeinrichtung zur Steuerung des Vortriebs und/oder der Leistungsabgabe der Aushärteeinrichtung durch einen Benutzer, insbesondere anhand der auf der Anzeigeeinrichtung angezeigten grafischen Repräsentation.

Es hat sich gezeigt, dass es für einen Bediener einfacher ist, eine grafische Repräsentation der Messwerte als Indikator für eine erfolgte Aushärtung zu erfassen, als auf die gemessenen Messwerte selbst zurückzugreifen. Die notwendige Temperatur an der Außenseite hängt beispielsweise von verschiedenen Faktoren ab, beispielsweise der Dicke des Auskleidungsschlauchs, der verwendeten Harze, etc. Eine grafische Repräsentation, beispielsweise in Form einer farblichen Indikation in "rot" für noch nicht ausgehärteten und in "grün" für einen ausgehärteten Abschnitt ermöglicht ein verbessertes Erfassen des Zustands des Auskleidungsschlauchs.

Besonders vorteilhaft kann dabei vorgesehen sein, dass die grafische Repräsentation abschnittsweise erfolgt, insbesondere im oder um den Wirkbereich der Aushärtevorrichtung. Insbesondere bei langen Auskleidungsschläuchen kann somit immer der für den Benutzer relevante Abschnitt in einer gewünschten Größe angezeigt werden.

Dabei kann es selbstverständlich vorgesehen sein, dass die entsprechenden Messwerte protokolliert werden, um einen Nachweis über das Aushärteverfahren und die erfolgreiche Aushärtung zu sichern.

Dabei kann es bevorzugt sein, dass ein Benutzer die Geschwindigkeit der Fortbewegung und/oder die Leistungsabgabe der Strahlungsquelle anhand der mindestens einen grafischen Repräsentation steuert.

Des weiteren kann es vorgesehen sein, dass die Regelungseinrichtung die Geschwindigkeit der Fortbewegung der Aushärtevorrichtung durch den Auskleidungsschlauch und/oder die Leistungsabgabe der Aushärtevorrichtung basierend auf der von der Messenrichtung erfassten Messwerte automatisiert regelt.

Auch liefert die Erfindung ein Verfahren zum Sanieren von Leitungen, insbesondere von Kanälen, Schächten, oder dergleichen, umfassend die folgenden Verfahrensschritte, insbesondere in dieser Reihenfolge und insbesondere umfassend ein erfindungsgemäßes:
a) Einführen eines Auskleidungsschlauchs in die Leitung, wobei der Auskleidungsschlauch mindestens eine durch eine Aktivierung aushärtbare und/oder aushärtende Lage sowie eine Außen um die aushärtbare Lage angeordnete Außenfolie umfasst, wobei der Auskleidungsschlauch mindestens eine Messeinrichtung, die ausgelegt und eingerichtet ist, einen Messwert repräsentativ für eine Aushärtung der aushärtbaren Lage auf der Außenseite der aushärtbaren Lage an einer Vielzahl von Messpunkten und/oder kontinuierlich zu messen, umfasst, die zwischen der aushärtbaren Lage und der Außenfolie angeordnet ist;
b) Einbringen einer Aushärtevorrichtung umfassend eine Strahlungsquelle, mit der die Aushärtung der aushärtbaren Lage aktiviert wird, in den Auskleidungsschlauch;
c) Expandieren des Auskleidungsschlauchs, insbesondere mittels eines Fluids, vorzugsweise Druckluft, so dass der Auskleidungsschlauch an der Innenwand der Leitung anliegt;
d) Fortbewegen der Aushärtevorrichtung durch das Leitungssystem, wobei die Aushärtevorrichtung zum Aushärten der aushärtbaren und/oder aushärtenden Lage aktiviert wird oder ist, und wobei die Fortbewegung der Aushärtevorrichtung in dem Auskleidungsschlauch und/oder die Leistungsabgabe der Strahlungsquelle der Aushärtevorrichtung in Abhängigkeit der durch die Messeinrichtung erfassten Messwerte an der Außenseite der aushärtbaren Lage gesteuert oder geregelt wird.

Dabei kann es sowohl vorgesehen sein, dass ein Benutzer die Aushärtung anhand der gemessenen Messewerte manuell steuert, oder dass eine vollautomatische oder teilautomatische Regelung anhand der Messwerte erfolgt.

Es kann dabei erfindungsgemäß vorgesehen sein, dass ein Anzeigen einer grafischen Repräsentation der von der Messeinrichtung erfassten Messwerte auf einer Anzeigeeinrichtung erfolgt, wobei eine erste grafische Repräsentation für einen ersten Messwert angezeigt wird, bei der der Auskleidungsschlauch noch nicht ausgehärtet ist und eine zweite grafische Repräsentation angezeigt wird, wenn Auskleidungsschlauch ausgehärtet ist.

Dabei kann es vorteilhaft sein, dass eine grafische Repräsentation der Temperatur an jedem Messpunkt der Vielzahl der Messpunkte angezeigt wird, insbesondere von denjenigen Messpunkten im Wirkbereich der Aushärtevorrichtung und/oder um den Wirkbereich der Aushärtevorrichtung.

Eine solche grafische Darstellung ermöglicht ein leichtes Erfassen des Aushärtevorgang durch den Benutzer.

Auch kann vorgesehen sein, dass ein Benutzer die Geschwindigkeit der Fortbewegung und/oder die Leistungsabgabe der Strahlungsquelle anhand der mindestens einen grafischen Repräsentation steuert.

Schließlich kann vorgesehen sein, dass eine Regelungseinrichtung die Geschwindigkeit der Fortbewegung der Aushärtevorrichtung durch den Auskleidungsschlauch und/oder die Leistungsabgabe der Aushärtevorrichtung basierend auf der von der Messeinrichtung erfassten Messwerte automatisiert regelt.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
- Figur 1:: eine schematische Schnittansicht eines erfindungsgemäßen Auskleidungsschlauchs; und
- Figur 2:: eine schematische Ansicht eines Ablaufdiagramms eines erfindungsgemäßen Verfahrens.

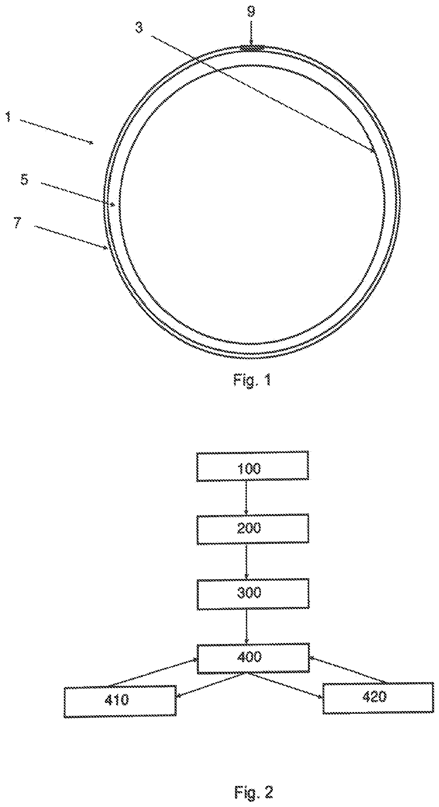

Figur 1 zeigt einen erfindungsgemäßen Auskleidungsschlauch 1 mit einer Innenfolie 3, einer aushärtbaren Lage 5 sowie einer Außenfolie 7. Zwischen der Außenfolie 7 und der aushärtbaren Lage 5 ist eine Messeinrichtung 9 angeordnet.

In Figur 2 ist ein schematisches Ablaufdiagramm eines erfindungsgemäßen Verfahrens gezeigt. In einem ersten Schritt 100 wird ein erfindungsgemäßer Auskleidungsschlauch in eine zu sanierende Leitung eingeführt. Im nachfolgenden Verfahrensschritt 200 wird die Aushärtevorrichtung in den Auskleidungsschlauch eingebracht. Nach einbringen der Aushärtevorrichtung wird der Auskleidungsschlauch in einem Verfahrensschritt 300 mit Druck beaufschlagt, so dass dieser an den Wänden der zur sanierenden Leitung anliegt. In einem Verfahrensschritt 400 wird die Fortbewegung der Aushärtevorrichtung in dem Auskleidungsschlauch und/oder die Leistungsabgabe der Aushärtevorrichtung in Abhängigkeit der durch die Messeinrichtung erfassten Messwerte an der Außenseite der aushärtbaren Lage gesteuert oder geregelt. Ist dabei zum Beispiel die gemessene Temperatur höher als ein erster Schwellwert, wird in einem Schritt 410 die Geschwindigkeit des Vortriebs der Aushärtevorrichtung erhöht und/oder die Leistungsabgabe der Strahlungsquelle reduziert. Ist zum Beispiel die gemessene Temperatur niedriger als ein zweiter Schwellwert, so wird in einem Schritt 420 die Geschwindigkeit des Vortriebs der Aushärtevorrichtung verringert und/oder die Leistungsabgabe der Strahlungsquelle erhöht.

## Patentansprüche

1. System zum Aushärten eines Auskleidungsschlauchs (1) umfassend eine Aushärtungsvorrichtung mit einer Strahlungsquelle, einen Auskleidungsschlauch (1) mit einer aushärtbaren Lage (5) und eine um die aushärtbare Lage (5) angeordnete Außenfolie (7), eine Messeinrichtung (9), die zwischen der aushärtbaren Lage (5) und der Außenfolie (7) angeordnet ist, wobei die Messeinrichtung (9) ausgelegt und eingerichtet ist, um einen Messwert repräsentativ für die Aushärtung der aushärtbaren Lage (5) zu erfassen, sowie eine Steuerungs- oder Regelungseinrichtung, die ausgelegt und eingerichtet ist, um die Fortbewegung der Aushärtevorrichtung in dem Auskleidungsschlauch (1) und/oder die Leistungsabgabe der Strahlungsquelle der Aushärtevorrichtung in Abhängigkeit der durch die Messeinrichtung (9) erfassten Messwerte an der Außenseite der aushärtbaren Lage (5) zu steuern oder zu regeln.

2. System nach Anspruch 1, **dadurch gekennzeichnet, dass** die Messeinrichtung (9) ausgelegt und eingerichtet ist, um eine Temperatur, eine dielektrizitätskostante, eine Farbe und/oder einen Zustand mittels Ultraschall der Aushärtung der aushärtbaren Lage (5) zu messen.

3. System nach Anspruch 1 oder Anspruch 2, **dadurch gekennzeichnet, dass** die Messeinrichtung (9) ausgelegt und eingerichtet ist, um eine Vielzahl von Messwerten anhand von Messpunkten entlang der Längsrichtung des Auskleidungsschlauchs (1) zu erfassen, wobei der Abstand der Messpunkte insbesondere durch den Wirkbereich der Strahlungsquelle bestimmt ist, wobei vorzugsweise immer mindestens N Messpunkte, mit N = 1, 2, 3, 4, 5, 6, 7, 8 oder 9, im Wirkbereich der Strahlungsquelle angeordnet sind.

4. System nach Anspruch 3, **dadurch gekennzeichnet, dass** eine ausschließlich diskrete Erfassung von Messwerten anhand von voneinander beabstandet angeordneten Messpunkten erfolgt.

5. System nach Anspruch 1 oder 2, **dadurch gekennzeichnet, dass** die Messeinrichtung (9) ausgelegt und eingerichtet ist, um Messwerte kontinuierlich über die gesamte Länge des Auskleidungsschlauchs (1) entlang dessen Längsrichtung zu erfassen.

6. System nach einem der vorangehenden Ansprüche, **dadurch gekennzeichnet, dass**
die Messeinrichtung (9) angeordnet ist, um Messwerte im unteren Drittel, insbesondere direkt am Boden und/oder am Bodenbereich des Auskleidungsschlauchs (1) zu umfassen.

7. System nach einem der vorangehenden Ansprüche, **dadurch**
**gekennzeichnet, dass**
die Aushärtevorrichtung als Strahlungsquelle eine Gasentladungslampe, eine Kurzbogenlampe, eine Stroboskoplampe, eine Blitzlampe, Licht emittierende Dioden (LEDs), eine Bogenlampe, insbesondere eine Xenon-Lampe, und/oder einer Quecksilber-Xenon-Lampe umfasst, wobei insbesondere das Leuchtmittel mindestens zehn Prozent (10%), insbesondere mindestens fünfzig Prozent (50%), der Strahlungsenergie in einem Wellenlängenbereich von 351 bis 800 nm, insbesondere in einem Bereich von 380 nm bis 800 nm, insbesondere in einem Bereich von 380 nm bis 700 nm, bevorzugt in einem Bereich von 390 nm bis 470 nm, oder in einem Bereich von 400 nm bis 800 nm, bereitstellt oder bereitstellen kann.

8. System nach einem der vorangehenden Ansprüche, **dadurch**
**gekennzeichnet, dass**
die Messeinrichtung (9) einen RFID-Transponder umfasst, um die Messwerte drahtlos and die Steuerungs- oder Regelungseinrichtung zu übertragen.

9. System nach einem der vorangehenden Ansprüche, **dadurch**
**gekennzeichnet, dass**
die Aushärtevorrichtung mittels eines Kabels, insbesondere eines Kabels umfassen Kevlarfasern und/oder mindestens ein Zugseil, und/oder Zugseils, in Wirkverbindung steht, um die Aushärtevorrichtung durch den Auskleidungsschlach zu bewegen.

10. System nach einem der vorangehenden Ansprüche, **dadurch**
**gekennzeichnet, dass**
die Regelungseinrichtung ausgelegt und eingerichtet ist, um die Fortbewegung der Aushärtevorrichtung in dem Auskleidungsschlauch (1) und/oder die Leistungsabgabe der Strahlungsquelle der Aushärtevorrichtung in Abhängigkeit der durch die Messeinrichtung (9) erfassten Messwerte automatisch zu regeln.

11. System nach Anspruch 10, **gekennzeichnet durch** definieren mindestens eines ersten Schwellwerts für einen Messwert repräsentativ für einen nicht ausgehährteten Auskleidungsschlauch (1) und mindestens eines zweiten Schwellwerts, unterschiedlich von dem ersten Schwellt, repräsentativ für einen ausgehärteten Auskleidungsschlauch, wobei eine Geschwindigkeit der Fortbewegung der Aushärtevorrichtung durch den Auskleidungsschlauch (1) bei einem Unterschreiten des ersten Schwellwerts verringert wird und bei einem Überschreiten des zweiten Grenzwerts erhöht wird und/oder die Leistungsabgabe der Aushärtevorrichtung bei einem Unterschreiten des ersten Grenzwerts erhöht und bei einem Überschreiten des zweiten Grenzwerts verringert wird.

12. System nach Anspruch 11, **gekennzeichnet durch**, die Schwellwerte in Abhängigkeit des auszuhärtenden Auskleidungsschlauchs, insbesondere in Abhängigkeit des Durchmessers der auszuhärtenden Lage (5) des Auskleidungsschlauchs, festlegbar oder festgelegt sind.

13. System nach einem der vorangehenden Ansprüche, **dadurch**
**gekennzeichnet, dass**
eine Anzeigeeinrichtung umfasst ist, die mit der Steuerungs- oder Regelungseinrichtung in Wirkverbindung steht, und wobei die Anzeigeeinrichtung ausgelegt und eingerichtet ist, um eine grafische Repräsentation der von der Messeinrichtung (9) erfassten Messwerte anzuzeigen, wobei insbesondere eine erste grafische Repräsentation für einen erste Messwert angezeigt wird, bei der der Auskleidungsschlauch (1) noch nicht ausgehärtet ist und eine zweite grafische Representation angezeigt wird, wenn Auskleidungsschlauch (1) ausgehärtet ist.

14. System nach Anspruch 13, weiterhin umfassend eine Eingabeeinrichtung zur Steuerung des Vortriebs und/oder der Leistungsabgabe der Aushärteeinrichtung durch einen Benutzer, insbesondere anhand der auf der Anzeigeeinrichtung angezeigten grafischen Repräsentation.

15. Verfahren zum Sanieren von Leitungen, insbesondere von Kanälen, Schächten, oder dergleichen, umfassend die folgenden Verfahrensschritte, insbesondere in dieser Reihenfolge und insbesondere umfassend System nach einem der vorangehenden Ansprüche:
a) Einführen eines Auskleidungsschlauchs (1) in die Leitung, wobei der Auskleidungsschlauch (1) mindestens eine durch eine Aktivierung aushärtbare und/oder aushärtende Lage (5) sowie eine Außen um die aushärtbare Lage (5) angeordnete Außenfolie (7) umfasst, wobei der Auskleidungsschlauch (1) mindestens eine Messeinrichtung, die ausgelegt und eingerichtet ist, einen Messwert repräsentativ für eine Aushärtung der aushärtbaren Lage (5) auf der Außenseite der aushärtbaren Lage (5) an einer Vielzahl von Messpunkten und/oder kontinuierlich zu messen, umfasst, die zwischen der aushärtbare Lage (5) und der Außenfolie (7) angeordnet ist;
b) Einbringen einer Aushärtevorrichtung umfassend eine Strahlungsquelle, mit der die Aushärtung der aushärtbaren Lage (5) aktiviert wird, in den Auskleidungsschlauch;
c) Expandieren des Auskleidungsschlauchs, insbesondere mittels eines Fluids, vorzugsweise Druckluft, so dass der Auskleidungsschlauch (1) an der Innenwand der Leitung anliegt;
d) Fortbewegen der Aushärtevorrichtung durch das Leitungssystem, wobei die Aushärtevorrichtung zum Aushärten der aushärtbaren und/oder aushärtenden Lage (5) aktiviert wird oder ist, und wobei die Fortbewegung der Aushärtevorrichtung in dem Auskleidungsschlauch (1) und/oder die Leistungsabgabe der Strahlungsquelle der Aushärtevorrichtung in Abhängigkeit der durch die Messeinrichtung (9) erfassten Messwerte an der Außenseite der aushärtbaren Lage (5) gesteuert oder geregelt wird.

16. Verfahren nach Anspruch 15, **gekennzeichnet durch** das Anzeigen einer grafischen Repräsentation der von der Messeinrichtung (9) erfassten Messwerte auf einer Anzeigeeinrichtung, wobei eine erste grafische Repräsentation für einen erste Messwert angezeigt wird, bei der der Auskleidungsschlauch (1) noch nicht ausgehärtet ist und eine zweite grafische Representation angezeigt wird, wenn Auskleidungsschlauch (1) ausgehärtet ist.

17. Verfahren nach Anspruch 16, **dadurch gekennzeichnet, dass** eine grafische Repräsentation der Temperatur an jedem Messpunkt der Vielzahl der Messpunkte angezeigt wird, insbesondere von denjenigen Messpunkten im Wirkbereich der Aushärtevorrichtung und/oder um den Wirkbereich der Aushärtevorrichtung.

18. Verfahren nach einem der Ansprüche Anspruch 16 oder 17, **dadurch**
**gekennzeichnet, dass**
ein Benutzer die Geschwindigkeit der Fortbewegung und/oder die Leistungsabgabe der Strahlungsquelle anhand der mindestens einen grafischen Repräsentation steuert.

19. Verfahren nach einem der Ansprüche 15 bis 18, **dadurch gekennzeichnet, dass**
eine Regelungseinrichtung die Geschwindigkeit der Fortbewegung der Aushärtevorrichtung durch den Auskleidungsschlauch (1) und/oder die Leistungsabgabe der Aushärtevorrichtung basierend auf der von der Messeinrichtung (9) erfassten Messwerte automatisiert regelt.

## Claims

1. System for curing a lining sleeve (1) comprising a curing device with a radiation source, a lining sleeve (1) with a curable ply (5) and an outer film (7) arranged around the curable ply (5), a measuring device (9), which is arranged between the curable ply (5) and the outer film (7), the measuring device (9) being designed and set up to sense a measured value representative of the curing of the curable ply (5), and also an open-loop or closed-loop control device, which is designed and set up to control the advancement of the curing device in the lining sleeve (1) and/or the power output of the radiation source of the curing device in an open-loop or closed-loop manner in dependence on the measured values sensed by the measuring device (9) on the outer side of the curable ply (5).

2. System according to Claim 1, **characterized in that** the measuring device (9) is designed and set up to measure a temperature, a dielectric constant, a colour and/or a state of the curing of the curable ply (5) by means of ultrasound.

3. System according to Claim 1 or Claim 2, **characterized in that** the measuring device (9) is designed and set up to sense a multiplicity of measured values on the basis of measuring points along the longitudinal direction of the lining sleeve (1), the distance between the measuring points being determined in particular by the effective range of the radiation source, there preferably always being at least N measuring points, where N = 1, 2, 3, 4, 5, 6, 7, 8 or 9, arranged in the effective range of the radiation source.

4. System according to Claim 3, **characterized in that** an exclusively discrete sensing of measured values is performed on the basis of measuring points arranged at a distance from one another.

5. System according to Claim 1 or 2, **characterized in that** the measuring device (9) is designed and set up to sense measured values continuously over the entire length of the lining sleeve (1) along its longitudinal direction.

6. System according to one of the preceding claims, **characterized in that** the measuring device (9) is arranged to comprise measured values in the lower third, in particular directly at the bottom and/or at the bottom region of the lining sleeve (1).

7. System according to one of the preceding claims, **characterized in that** the curing device comprises as a radiation source a gas discharge lamp, a short arc lamp, a stroboscope lamp, a flash lamp, light-emitting diodes (LEDs), an arc lamp, in particular a xenon lamp, and/or a mercury-xenon lamp, the lighting means in particular providing or being able to provide at least ten percent (10%), in particular at least fifty percent (50%), of the radiation energy in a wavelength range from 351 to 800 nm, in particular in a range from 380 nm to 800 nm, in particular in a range from 380 nm to 700 nm, preferably in a range from 390 nm to 470 nm, or in a range from 400 nm to 800 nm.

8. System according to one of the preceding claims, **characterized in that** the measuring device (9) comprises an RFID transponder to transmit the measured values wirelessly to the open-loop or closed-loop control device.

9. System according to one of the preceding claims, **characterized in that** the curing device is in operative connection by means of a cable, in particular a cable comprising Kevlar fibres and/or at least one pulling rope, and/or by means of a pulling rope, to move the curing device through the lining sleeve.

10. System according to one of the preceding claims, **characterized in that** the control device is designed and set up to control the advancement of the curing device in the lining sleeve (1) and/or the power output of the radiation source of the curing device automatically in a closed-loop manner in dependence on the measured values sensed by the measuring device (9) .

11. System according to Claim 10, **characterized by** defining at least a first threshold value for a measured value representative of a non-cured lining sleeve (1) and at least a second threshold value, different from the first threshold value, representative of a cured lining sleeve, wherein a rate of advancement of the curing device through the lining sleeve (1) is reduced if the measured value is below the first threshold value and is increased if the measured value is above the second limit value and/or the power output of the curing device is increased if the measured value is below the first limit value and reduced if the measured value is above the second limit value.

12. System according to Claim 11, **characterized by** the threshold values being fixable or fixed in dependence on the lining sleeve to be cured, in particular in dependence on the diameter of the ply (5) to be cured of the lining sleeve.

13. System according to one of the preceding claims, **characterized in that** a display device is comprised, in operative connection with the open-loop or closed-loop control device, and the display device being designed and set up to display a graphic representation of the measured values sensed by the measuring device (9), with in particular a first graphic representation being displayed for a first measured value in the case where the lining sleeve (1) is not yet cured and a second graphic representation being displayed if the lining sleeve (1) is cured.

14. System according to Claim 13, also comprising an input device for controlling the advancement and/or the power output of the curing device by a user, in particular on the basis of the graphic representation displayed on the display device.

15. Method for rehabilitating lines, in particular sewers, shafts or the like, comprising the following method steps, in particular in this sequence and in particular comprising the system according to one of the preceding claims:
a) inserting a lining sleeve (1) into the line, the lining sleeve (1) comprising at least one curable ply (5) that can be cured and/or cures by activation and also an outer film (7) arranged on the outside around the curable ply (5), the lining sleeve (1) comprising at least one measuring device that is designed and set up to measure a measured value representative of a curing of the curable ply (5) on the outer side of the curable ply (5) at a multiplicity of measuring points and/or continuously and is arranged between the curable ply (5) and the outer film (7);
b) introducing a curing device comprising a radiation source, with which the curing of the curable ply (5) is activated, into the lining sleeve;
c) expanding the lining sleeve, in particular by means of a fluid, preferably compressed air, so that the lining sleeve (1) lies against the inner wall of the line;
d) advancing the curing device through the line system, the curing device being activated or having been activated for curing the curable and/or curing ply (5), and the advancement of the curing device in the lining sleeve (1) and/or the power output of the radiation source of the curing device being controlled in an open-loop or closed-loop manner in dependence on the measured values sensed by the measuring device (9) on the outer side of the curable ply (5).

16. Method according to Claim 15, **characterized by** the display of a graphic representation of the measured values sensed by the measuring device (9) on a display device, with a first graphic representation for a first measured value being displayed in the case where the lining sleeve (1) is not yet cured and a second graphic representation being displayed if the lining sleeve (1) is cured.

17. Method according to Claim 16, **characterized in that** a graphic representation of the temperature at each measuring point of the multiplicity of measuring points is displayed, in particular of those measuring points in the active range of the curing device and/or around the active range of the curing device.

18. Method according to either of Claims 16 and 17, **characterized in that** a user controls the rate of advancement and/or the power output of the radiation source on the basis of the at least one graphic representation.

19. Method according to one of Claims 15 to 18, **characterized in that** a control device automatically controls the rate of advancement of the curing device through the lining sleeve (1) and/or the power output of the curing device on the basis of the measured values sensed by the measuring device (9).

## Revendications

1. Système de durcissement d'un tuyau de revêtement (1), ledit système comprenant un dispositif de durcissement pourvu d'une source de rayonnement, un tuyau de revêtement (1) pourvu d'une couche durcissable (5) et un film extérieur (7) disposé autour de la couche durcissable (5), une unité de mesure (9) qui est disposée entre la couche durcissable (5) et le film extérieur (7), l'unité de mesure (9) étant conçue et adaptée pour acquérir une valeur de mesure qui est représentative du durcissement de la couche durcissable (5), et une unité de commande ou de régulation qui est conçue et adaptée pour commander ou réguler la progression du dispositif de durcissement dans le tuyau de revêtement (1) et/ou la puissance de sortie de la source de rayonnement du dispositif de durcissement en fonction des valeurs de mesure, acquises par l'unité de mesure (9), sur le côté extérieur de la couche durcissable (5).

2. Système selon la revendication 1, **caractérisé en ce que** l'unité de mesure (9) est conçue et adaptée pour mesurer une température, une constante diélectrique, une couleur et/ou un état du durcissement de la couche durcissable (5) par ultrason.

3. Système selon la revendication 1 ou la revendication 2, **caractérisé en ce que** l'unité de mesure (9) est conçue et adaptée pour acquérir un grand nombre de valeurs de mesure à l'aide de points de mesure le long de la direction longitudinale du tuyau de revêtement (1),
la distance entre les points de mesure étant déterminée notamment par la zone d'action de la source de rayonnement, de préférence au moins N points de mesure, avec N = 1, 2, 3, 4, 5, 6, 7, 8 ou 9, étant toujours disposés dans la zone d'action de la source de rayonnement.

4. Système selon la revendication 3, **caractérisé en ce qu'**une acquisition exclusivement discrète de valeurs de mesure est effectuée à l'aide de points de mesure disposés à distance les uns des autres.

5. Système selon la revendication 1 ou 2, **caractérisé en ce que** l'unité de mesure (9) est conçue et adaptée pour acquérir des valeurs de mesure en continu sur toute la longueur du tuyau de revêtement (1) suivant la direction longitudinale de celui-ci.

6. Système selon l'une des revendications précédentes, **caractérisé en ce que** l'unité de mesure (9) est disposée de manière à inclure des valeurs de mesure dans le tiers inférieur, en particulier directement sur le fond et/ou sur la zone de fond du tuyau de revêtement (1).

7. Système selon l'une des revendications précédentes, **caractérisé en ce que** le dispositif de durcissement comprend une lampe à décharge gazeuse, une lampe à arc court, une lampe stroboscopique, une lampe flash, des diodes électroluminescentes (LED), une lampe à arc, en particulier une lampe au xénon, et/ou une lampe au mercure-xénon comme une source de rayonnement, en particulier le moyen d'éclairement fournissant ou pouvant fournir au moins dix pour cent (10%), en particulier au moins cinquante pour cent (50%), de l'énergie rayonnante dans une gamme de longueurs d'onde de 351 à 800nm, en particulier dans une gamme de 380nm à 800nm, en particulier dans une gamme de 380nm à 700nm, de préférence dans une gamme de 390nm à 470nm, ou dans une gamme de 400nm à 800nm.

8. Système selon l'une des revendications précédentes, **caractérisé en ce que** l'unité de mesure (9) comprend un transpondeur RFID destiné à transmettre sans fil les valeurs de mesure à l'unité de commande ou de régulation.

9. Système selon l'une des revendications précédentes, **caractérisé en ce que** le dispositif de durcissement est relié fonctionnellement au moyen d'un câble, notamment d'un câble comprenant des fibres de Kevlar et/ou au moins un câble de traction, et/ou d'un câble de traction afin de déplacer le dispositif de durcissement à travers le tuyau de revêtement.

10. Système selon l'une des revendications précédentes, **caractérisé en ce que** l'unité de régulation est conçue et/ou adaptée pour réguler automatiquement la progression du dispositif de durcissement dans le tuyau de revêtement (1) et/ou la puissance de sortie de la source de rayonnement du dispositif de durcissement en fonction des valeurs de mesure acquises par l'unité de mesure (9).

11. Système selon la revendication 10, **caractérisé par** la définition d'au moins une première valeur seuil destinée à une valeur de mesure représentative d'un tuyau de revêtement (1) non durci et d'au moins une deuxième valeur seuil, différente de la première valeur seuil, représentative d'un tuyau de revêtement durci,
la vitesse de progression du dispositif de durcissement à travers le tuyau de revêtement (1) étant réduite lorsque la première valeur seuil est franchie vers le bas et augmentée lorsque la deuxième valeur seuil est franchie vers le haut et/ou la puissance de sortie du dispositif de durcissement est augmentée lorsque la première valeur seuil est franchie vers le bas et réduite lorsque la deuxième valeur seuil est franchie vers le haut.

12. Système selon la revendication 11, **caractérisé en ce que** les valeurs seuils sont fixées ou peuvent être fixées en fonction du tuyau de revêtement à faire durcir, notamment en fonction du diamètre de la couche (5) du tuyau de revêtement à faire durcir.

13. Système selon l'une des revendications précédentes, **caractérisé en ce qu'**une unité d'affichage est incluse qui est reliée fonctionnellement à l'unité de commande ou de régulation, et l'unité d'affichage étant conçue et adaptée pour afficher une représentation graphique des valeurs de mesure acquises par l'unité de mesure (9), en particulier une première représentation graphique étant affichée pour une première valeur de mesure pour laquelle le tuyau de revêtement (1) n'a pas encore durci et une deuxième représentation graphique étant affichée lorsque le tuyau de revêtement (1) a durci.

14. Système selon la revendication 13, comprenant en outre une unité d'entrée destinée à commander, par le biais d'un utilisateur, la propulsion et/ou la puissance de sortie du dispositif de durcissement, notamment à l'aide de la représentation graphique affichée sur l'unité d'affichage.

15. Procédé de réhabilitation de conduites, notamment de canaux, de puits ou analogues, ledit procédé comprenant les étapes suivantes, notamment dans cet ordre et comprenant notamment le système selon l'une des revendications précédentes :
a) insérer un tuyau de revêtement (1) dans la conduite, le tuyau de revêtement (1) comprenant au moins une couche (5) qui durcit et/ou peut être durcie par activation et un film extérieur (7) disposé autour de la couche durcissable (5), le tuyau de revêtement (1) comprenant au moins une unité de mesure qui est conçue et adaptée pour mesurer une valeur de mesure représentative du durcissement de la couche durcissable (5) sur le côté extérieur de la couche durcissable (5) en un grand nombre de points de mesure et/ou en continu et qui est disposée entre la couche durcissable (5) et le film extérieur (7) ;
b) introduire dans le tuyau de revêtement un dispositif de durcissement comprenant une source de rayonnement qui permet d'activer le durcissement de la couche durcissable (5) ;
c) expanser le tuyau de revêtement, notamment au moyen d'un fluide, de préférence de l'air comprimé, de sorte que le tuyau de revêtement (1) vienne en appui sur la paroi intérieure de la conduite ;
d) faire progresser le dispositif de durcissement à travers le système de conduites, le dispositif de durcissement étant activé ou pouvant être activé afin de faire durcir la couche (5) qui est en cours de durcissement et/ou qui peut être durcie, et la progression du dispositif de durcissement dans le tuyau de revêtement (1) et/ou la puissance de sortie de la source de rayonnement du dispositif de durcissement étant commandée ou régulée en fonction des valeurs de mesure acquises par l'unité de mesure (9) sur le côté extérieur de la couche durcissable (5).

16. Procédé selon la revendication 15, **caractérisé par** l'affichage d'une représentation graphique des valeurs de mesure, acquises par l'unité de mesure (9), sur une unité d'affichage, une première représentation graphique étant affichée pour une première valeur de mesure pour laquelle le tuyau de revêtement (1) n'a pas encore durci et une deuxième représentation graphique étant affichée lorsque le tuyau de revêtement (1) a durci.

17. Procédé selon la revendication 16, **caractérisé en ce qu'**une représentation graphique de la température est affichée à chaque point de mesure de la pluralité de points de mesure, notamment des points de mesure situés dans la zone d'action du dispositif de durcissement et/ou autour de la zone d'action du dispositif de durcissement.

18. Procédé selon l'une des revendications 16 et 17, **caractérisé en ce qu'**un utilisateur commande la vitesse de progression et/ou la puissance de sortie de la source de rayonnement à l'aide d'au moins une représentation graphique.

19. Procédé selon l'une des revendications 15 à 18, **caractérisé en ce que**
une unité de régulation régule automatiquement la vitesse de progression du dispositif de durcissement à travers le tuyau de revêtement (1) et/ou la puissance de sortie du dispositif de durcissement sur la base des valeurs de mesure acquises par l'unité de mesure (9).
